# EUROPEAN PATENT APPLICATION

(11) **EP 2 204 944 A1**
(43) Date of publication of application: **07.07.2010**
(21) Application number: 08853376.5
(22) Date of filing: 18.11.2008
(51) Int. Cl.: H04L 12/02

(54) **A COMMUNICATION SYSTEM AND DEVICE**

(30) Priority: 21.11.2007 CN 200710124666
(71) Applicant: Huawei Technologies Co., Ltd., Longgang District, Shenzhen Guangdong 518129 (CN)
(72) Inventor: LI, Sien, Shenzhen (CN); WU, Haijun, Shenzhen (CN); SUN, Luyao, Shenzhen (CN); YU, Zhongyang, Shenzhen (CN)
(74) Representative: Kreuz, Georg Maria
(86) International application number: PCT/CN2008/073095
(87) International publication number: WO 2009/067939

(57) **Abstract**

A network device has a backboard and service boards. The service boards are connected to the backboard through buses. The backboard further includes a basic backboard and sub-backboards. The basic backboard is adapted to provide basic system buses and the sub-backboards are adapted to provide extended system buses. The sub-backboards are connected to the basic backboard through extended interfaces.

## Description

The application claims the benefit of priority to Chinese Patent Application No. 200710124666.8, filed on November 21, 2007, and entitled "COMMUNICATION SYSTEM AND DEVICE", which is incorporated herein by reference in its entirety.

### FIELD OF THE TECHNOLOGY

The present invention relates to the field of communication, and more particularly to a communication system and device.

### BACKGROUND OF THE INVENTION

With the development of modern communication technologies, an access network needs to satisfy access requirements of various service networks and requirements of users for the universality and diversity of the services. Moreover, the future trend is to develop a full-service access network with integrated wide-band and narrow-band access at a network access layer. In order to ensure that the system has abundant interface types to meet demands of different users, a full-function backboard is usually designed in the existing system, and all the buses are integrated on the backboard, so as to realize the compatibility of the access of various interface cards.

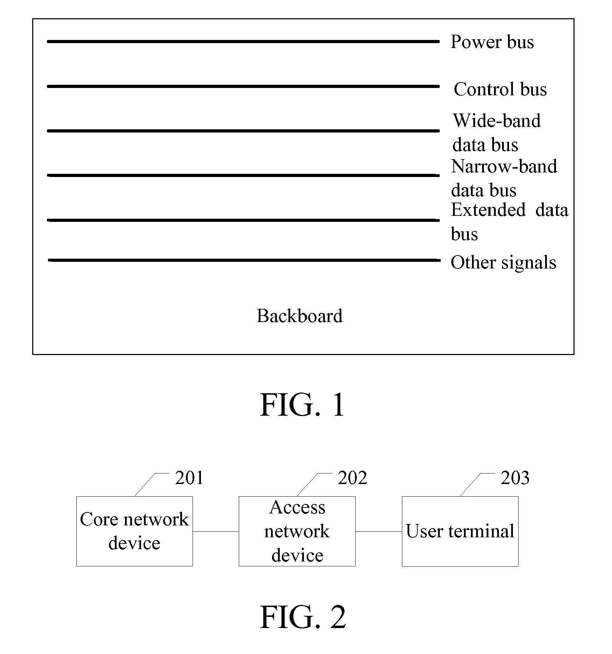

Referring to FIG. 1, the existing access device usually has only one backboard. In order to meet the demands of different interface types, nearly all the types of data buses, control buses, and power buses are integrated on the backboard. This results in a high cost and undesirable subsequent extensibility. For example, the wide-band access device is oriented to the applications of a wide-band digital subscriber line (DSL) access, a gigabit-capable passive optical network (GPON) access, and a narrow-band service access, so that the backboard needs to provide a time division multiplex (TDM) bus, a gigabit Ethernet (GE) bus, and a 10GE bus or a 4GE bus. Meanwhile, in consideration of the continuous improvement of the subsequent access capability, various types of extended buses still need to be reserved.

The above design cannot be differentially configured for different service requirements, so that a printed circuit board (PCB) is quite large and has many layers, and various connectors are provided, which inevitably increases the cost and greatly lowers the competitiveness of the system. Meanwhile, currently, as the bus technology is developed rapidly with rather short updating periods, the smooth upgrading capability and the extensibility of the system are also very important, and it is a problem to be considered during the design on how to realize the extendibility without largely increasing the cost. Moreover, since all the buses are pre-integrated on the existing backboard, when a new bus technology emerges subsequently, the system cannot be upgraded through a simple method; while instead, the backboard and all the interface boards need to be re-designed. Further, due to the uncertainty of the technology, the reserved buses in the system have potential risks. Once the service requirements are changed and a new design is required, the full-function backboard needs to be developed again, which takes a long developing and test period.

### SUMMARY OF THE INVENTION

The present invention is directed to a communication system and device having modularized backboards.

In a technical solution of the present invention, a network device is provided, which includes a backboard and service boards. The service boards are connected to the backboard through buses. The backboard further includes a basic backboard and sub-backboards. The basic backboard is adapted to provide basic system buses and the sub-backboards are adapted to provide extended system buses. The sub-backboards are connected to the basic backboard through extended interfaces.

The present invention achieves the following beneficial effects. In the invention, basic functions and extended functions of the backboard are separated and are modularly designed, so that different backboard systems can be flexibly combined according to service requirements of different users, thereby optimally controlling the cost and effectively reducing the cost of the system for most of the basic applications. Moreover, a desirable extensibility is obtained, and corresponding sub-backboards are proposed rapidly according to the latest bus technology, so as to construct a new system platform with the basic backboard to meet the growing service requirements. In addition, the mature basic backboard may also be easily and directly applied in other systems, thereby greatly shortening the developing period of the system.

### BRIEF DESCRIPTION OF THE DRAWINGS

FIG. 1 is a schematic structural view of an existing backboard;
FIG. 2 is a schematic structural view of a communication system according to an embodiment of the present invention; and
FIG. 3 is a schematic structural view of a backboard according to an embodiment of the present invention.

### DETAILED DESCRIPTION OF THE EMBODIMENTS

Referring to FIG. 2, a communication system of the present invention includes a core network device 201 and an access network device 202. The access network device 202 is adapted to enable a user terminal 203 to get access to the core network device 201. The access network device 202 includes a backboard and service boards installed therein. The service boards are connected to the backboard through buses.

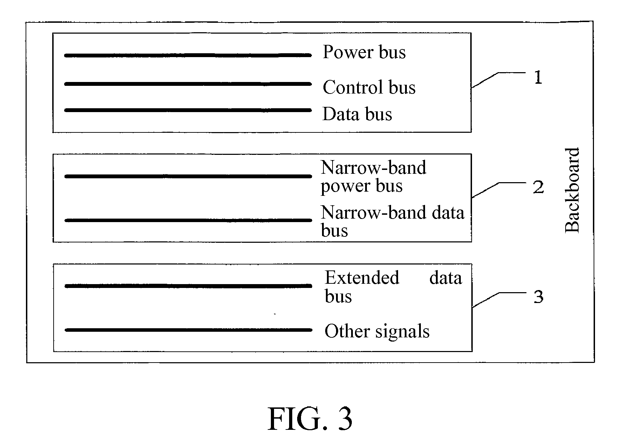

Referring to FIG. 3, the buses on the backboard of the network device of the present invention are divided into several parts, thus forming a basic backboard 1 and a plurality of sub-backboards, for example, a sub-backboard 2 and a sub-backboard 3. The various buses on the basic backboard and the sub-backboards are all printed circuit lines disposed on a PCB. The sub-backboards 2 and 3 are connected to the basic backboard 1 through extended interfaces, and the connection between the basic backboard 1 and the sub-backboards 2 and 3 can be made by using cables or flexible boards. The connection configuration of cable or flexible board is quite flexible, and takes up a small space.

The basic backboard 1 is a basic part of the network device, and is adapted to provide the most basic system buses, which are usually the lowest configuration of ensuring a normal operation of the network device. That is to say, the basic backboard 1 is configured to basically ensure a normal operation of the network device. The system buses mainly include a power bus, a control bus, a data bus, and the like, so as to basically satisfy applications of conventional wide-band services, for example, digital subscriber line (DSL) access buses such as an asymmetrical digital subscriber loop (ADSL) or a very-high-bit-rate digital subscriber loop (VDSL).

Narrow-band dedicated data buses are mainly integrated on the sub-backboard 2. The narrow-band dedicated data buses can for example be a TDM bus and a narrow-band power bus. The basic backboard 1 and the sub-backboard 2 can be used in combination in a system to support both the wide-band service and narrow-band service. For example, the system can support the basic ADSL/VDSL wide-band service, and also provide access capability of the narrow-band service access capability, including a plain old telephone service (POTS), an E1/T1, an inverse multiplexing over ATM (IMA), and other conventional services.

High speed extended data buses are mainly integrated on the sub-backboard 3. The high speed extended data buses can for example be a 10 gigabit media independent interface (XGMII) bus, and a 10 gigabit attachment unit interface (XAUI) bus, so as to satisfy high speed bandwidth service requirements, including point-to-point (P2P), PON, and VDSL2.Definitely, multi-services access can be realized by flexibly extending the sub-backboards. The sub-backboards may be divided according to characteristics of the subsequent services or the bandwidth requirements. Moreover, the sub-backboards are not limited to be divided into the aforementioned two sub-backboards, for example, the sub-backboards may also include one for reserved wireless access.

In the present invention, basic functions and extended functions of the backboard are separated and are modularly designed, so that different backboard systems can be flexibly combined according to service requirements of different users, thereby optimally controlling the cost and effectively reducing the cost of the system for most of the basic applications. Moreover, a desirable extensibility of the backboard is obtained, and corresponding sub-backboards are proposed rapidly according to the latest bus technology, so as to construct a new system platform with the basic backboard to meet the growing service requirements. In addition, the mature basic backboard may also be easily and directly applied in other systems, thereby greatly shortening the developing period of the system.

The above descriptions are merely some exemplary embodiments of the present invention. In practice, proper improvements may be made in order to meet the specific requirements. Therefore, it is understandable that the embodiments of the present invention are merely exemplary and is in no way intended to limit the present invention.

## Claims

1. A network device, comprising a backboard and service boards, wherein the service boards are connected to the backboard through buses, the backboard further comprises a basic backboard and sub-backboards, the basic backboard is adapted to provide basic system buses and the sub-backboards are adapted to provide extended system buses, the sub-backboards are connected to the basic backboard through extended interfaces, and the basic backboard is configured to basically ensure a normal operation of the device.

2. The network device according to claim 1, wherein the basic backboard has a power bus, a control bus, and a data bus.

3. The network device according to claim 2, wherein the data bus is a wide-band digital subscriber line (DSL) access bus.

4. The network device according to claim 1, wherein the sub-backboard has one selected from a group consisting of a narrow-band dedicated data bus, a high speed extended data bus, and a wireless access bus, and any combination thereof.

5. The network device according to claim 1, wherein the sub-backboard and the basic backboard are connected via a cable or a flexible board.

6. A communication system, comprising a core network device and an access network device, wherein a user terminal is connected to the core network device through the access network device, a backboard of the access network device further comprises a basic backboard and sub-backboards, the basic backboard is adapted to provide basic system buses, the sub-backboards are adapted to provide extended system buses, and the sub-backboards are connected to the basic backboard through extended interfaces.

7. The communication system according to claim 6, wherein the basic backboard has a power bus, a control bus, and a data bus.

8. The communication system according to claim 7, wherein the data bus is a wide-band digital subscriber line (DSL) access bus.

9. The communication system according to claim 6, wherein the sub-backboard has one selected from a group consisting of a narrow-band dedicated data bus, a high speed extended data bus, and a wireless access bus, and any combination thereof.

10. The communication system according to claim 6, wherein the sub-backboard and the basic backboard are connected via a cable or a flexible board.
